# EUROPEAN PATENT SPECIFICATION

(11) **EP 3 484 930 B1**
(45) Date of publication and mention of the grant of the patent: **04.11.2026**
(21) Application number: 17737572.2
(22) Date of filing: 11.07.2017
(51) Int. Cl.: C08F 110/06, C08F 4/646, C08F 4/654, C08K 5/00

(54) **SOLID CATALYST FOR THE PREPARATION OF NUCLEATED POLYOLEFINS**
FESTER KATALYSATOR ZUR HERSTELLUNG VON NUKLEIERTEN POLYOLEFINEN
CATALYSEUR SOLIDE POUR LA PRÉPARATION DE POLYOLÉFINES NUCLÉÉES

(30) Priority: 12.07.2016 EP 16179036
(43) Date of publication of application: 22.05.2019
(73) Proprietor: Borealis GmbH, 1020 Vienna (AT)
(72) Inventor: VESTBERG, Torvald, 06100 Porvoo (FI)
(74) Representative: Maiwald GmbH
(86) International application number: PCT/EP2017/067325
(87) International publication number: WO 2018/011165

(56) References cited:
- EP-A1- 1 801 155
- EP-A2- 0 395 391
- WO-A2-2009/045043
- US-A1- 2008 182 950

## Description

The present invention is directed to a process for the preparation of solid catalyst particles comprising a Ziegler Natta catalyst.

The application of polymeric nucleating agents for the manufacture of nucleated propylene polymers is well known in the art. Said polymeric nucleating agents are usually prepared in the presence of the catalyst for preparing the polypropylene in a catalyst modification prepolymerization step prior to the polymerization of propylene. In other words, the catalyst is modified by polymerizing a vinyl monomer in the presence of said catalyst. For example, a process wherein such a modified catalyst is applied is described in WO 99/024478, WO 99/024479 WO 00/068315 or EP0395 391.

Usually, the polymerization of a vinyl monomer in order to obtain the modified catalyst takes place in the medium in which the catalyst is also fed into the propylene polymerization process. The so far used medium is an oil or highly viscous hydrocarbon medium which is appropriate in case the modified catalyst is fed into the polymerization reactor directly after its preparation. However, in case it is desired to store or transport the modified catalyst before using it, it has turned out that transportation of the modified catalyst in the so far used oil or highly viscous medium is not feasible.

Thus, it is an object of the present invention to provide a process for a modified catalyst for the preparation of nucleated polypropylene whereby the catalyst can be easily stored and/or transported and is able to produce a polypropylene of high isotacticity, crystallization temperature and flexural modulus.

The finding of the present invention is to carry out the preparation of the modified catalyst in a low boiling medium, which after the process can be easily separated from the modified catalyst, thus giving a modified catalyst in the form of dry solid particles. The thus obtained catalyst can be stored and transported as dry catalyst particles. It was also found that isotacticity, crystallization temperature and flexural modulus of the polypropylene obtained by using said dry catalyst particles are improved compared to the modified catalyst prepared and provided in oil or in highly viscous medium as described by the prior art.

The present invention is directed to a process as set forth in the claims.

Accordingly, the present invention is directed to a process for the preparation of solid catalyst particles, comprising
(a) a Ziegler-Natta catalyst (ZN-C) comprising compounds (TC) of a transition metal of Group 4 to 6 of IUPAC, a Group 2 metal compound (MC) and an internal donor (ID);
(b) a co-catalyst (Co),
(c) optionally an external donor (ED), and
(d) a polymeric nucleating agent comprising vinyl monomer units of formula (I)

   CH₂=CH-CHR¹R² (I),

   wherein R¹ and R², together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system,
wherein said solid catalyst particles are not dissolved or suspended in a liquid medium.

Additionally or alternatively to the previous paragraph, R¹ and R² independently represent a linear or branched C1-C20 alkyl, C4- C20 cycloalkyl or a group of C4-C20 aromatic ring. Preferably R¹ and R², together with the C-atom wherein they are attached to, form a five- or six-membered saturated or unsaturated or aromatic ring or independently represent a lower alkyl group comprising from 1 to 4 carbon atoms.

Preferred vinyl monomers for the preparation of a polymeric nucleating agent to be used in accordance with the present invention are in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof.

It is especially preferred that the polymeric nucleating agent is selected from the group of polyvinylalkanes or polyvinylcycloalkanes, in particular polyvinylcyclohexane (polyVCH), polyvinylcyclopentane, polyvinyl-2-methyl cyclohexane, poly-3-methyl-1-butene, poly-3-ethyl-1-hexene, poly-4-methyl-1-pentene, polystyrene, poly-p-methyl-styrene, polyvinylnorbornane or mixtures thereof.

According to another embodiment of the present invention, the compounds (TC) of a transition metal of Group 4 to 6 of IUPAC are selected from the group consisting of Group 4 and Group 5 compounds, especially titanium compounds having an oxidation degree of 4.

It is especially preferred that the Group 2 metal compound (MC) is a magnesium compound.

According to one embodiment of the present invention, the polymeric nucleating agent comprising vinyl monomer units is obtained in the presence of the Ziegler-Natta catalyst (ZN-C) comprising compounds (TC) of a transition metal of Group 4 to 6 of IUPAC, a Group 2 metal compound (MC) and an internal donor (ID), a co-catalyst (Co), and optionally an external donor (ED).

The co-catalyst (Co) used in the present invention is an organometallic compound of a Group 13 metal. Preferably it is selected from the group consisting of Al-trialkyls, Al-alkyl halides, Al-alkoxides, Al-alkoxy halides and Al-halides. Especially the cocatalyst is selected from trialkylaluminium, dialkyl aluminium chloride or alkyl aluminium dichloride or mixtures thereof, where the alkyl is a C1-C4 alkyl. In one specific embodiment the cocatalyst (Co) is triethylaluminium (TEAL).

Suitable internal electron donors are, among others, 1,3-diethers and (di)esters of (di)carboxylic acids, like phthalates, malonates, maleates, substituted maleates, benzoates, glutarates, cyclohexene-1,2-dicarboxylates and succinates or derivatives thereof.

In the Ziegler-Natta catalyst (ZN-C) typically the amount of Ti is 1 to 6 wt-%, amount of Mg is 10 to 25 wt-% and amount of internal donor is 5 to 40 wt-%.

According to preferred embodiments of the present invention, the internal donor (ID) is a dialkylphthalate of formula (II) 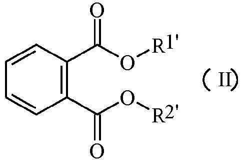 wherein R^{1'} and R^{2'} are independently a C₂ - C₁₈ alkyl.

The internal electron donor (ID) is understood to mean a donor compound being part of the solid catalyst component, i.e. added during the synthesis of the catalyst component. The terms internal electron donor and internal donor have the same meaning in the present application and the terms are interchangeable.

Suitable external donors (ED) include certain silanes, ethers, esters, amines, ketones, heterocyclic compounds and blends of these.

According to another embodiment of the present invention, the external donor (ED) is selected from silanes of
a compound of formula (III)

   R³ₙR⁴ₘSi(OR⁵)₄₋ₙ₋ₘ (III),
wherein R³, R⁴ and R⁵can be the same or different and represent linear, branched or cyclic aliphatic or aromatic groups, and n and m are 0, 1, 2 or 3 and the sum n + m is equal to or less than 3
   or
a compound of formula (IV)

   Si(OCH₂CH₃)₃(NR³R⁴) (IV)
wherein R³ and R⁴ can be the same or different a represent a linear, branched or cyclic hydrocarbon group having 1 to 12 carbon atoms,
or is a compound of formula (V)

   R⁶R⁷C(COMe)₂ (V),
wherein R⁶ and R⁷ can be the same or different and stand for a branched aliphatic or cyclic or aromatic group.

Alkoxy silane type compounds are typically used as an external electron donor in propylene (co)polymerization process, and are as such known and described in patent literature. E.g. EP0250229, WO2006104297, EP0773235, EP0501741 and EP0752431 disclose different alkoxy silanes used as external donors in polymerizing propylene.

Preferred examples of external electron donors are silanes selected from(tert-butyl)₂Si(OCH₃)₂, (cyclohexyl)(methyl)Si(OCH₃)₂, (phenyl)₂Si(OCH₃)₂ and (cyclopentyl)₂Si(OCH₃)₂.

External donors and external electron donors have the same meaning in the present application. External donors are added as a separate component to the polymerization process and optionally to the catalyst modification step.

The present invention is also directed to a process for the preparation of solid catalyst particles
comprising
(a) a Ziegler-Natta catalyst (ZN-C) comprising compounds (TC) of a transition metal of Group 4 to 6 of IUPAC, a Group 2 metal compound (MC) and an internal donor (ID);
(b) a co-catalyst (Co),
(c) optionally an external donor (ED), and
(d) a polymeric nucleating agent obtained from a vinyl monomer of formula (I)

   CH₂=CH-CHR¹R² (I),

   wherein R¹ and R², together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system,
wherein said solid catalyst particles are not dissolved or suspended in a liquid medium,
the process comprising the steps of
i) polymerizing a vinyl monomer of formula (I)

   CH₂=CH-CHR¹R² (I)

   wherein R¹ and R² correspond to the definition above, at a weight ratio of the vinyl monomer to the catalyst amounting to 0.1 to below 5,
   in the presence of
      (a) a Ziegler-Natta catalyst (ZN-C) comprising compounds (TC) of a transition metal of Group 4 to 6 of IUPAC, a Group 2 metal compound (MC) and an internal donor (ID);
      (b) a co-catalyst (Co),
      (c) optionally an external donor (ED), and
      (d) an organic inert solvent (S) having a boiling point below 130 °C which does not essentially dissolve the polymerized vinyl compound,
   ii) continuing the polymerization reaction of the vinyl monomers until the concentration of unreacted vinyl monomers is less than 1.5 wt.-% in the reaction mixture, whereby no prepolymerization with propylene and/or ethylene and/or alpha olefin(s) takes place,
   iii) removing the solvent (S) to obtain the catalyst in the form of dry solid particles.

When removing the solvent (S) in step iii), possible unreacted vinyl monomers dissolved in the solvent (S) will be removed as well.

According to one embodiment of the present invention, the solvent (S) is selected from unbranched or branched C₄ to C₈ alkanes.

The present invention is also concerned with the process as described above whereby the catalyst in the form of dry solid particles is used for the manufacture of a polymer, like a homopolymer of propylene or copolymer of propylene-with ethylene and/or α-olefin of 4 to 10 C atoms. In a preferred aspect the process for the manufacture of a polymer comprises at least one loop and/or at least one gas phase reactor.

In yet a further aspect, the present invention concerns the process as described above wherein the manufacture of a polymer is the manufacture of a propylene homopolymer having
i) a flexural modulus measured according to ISO 178 above 2100 MPa and/or
ii) a crystallization temperature Tc above 129 °C.

In the following,further details are provided.

### The solid catalyst particles

As outline above, the present invention is directed to a process for the preparation of solid catalyst particles for the preparation of polyolefins.

Said solid catalyst particles comprise a Ziegler-Natta catalyst (ZN-C) comprising compounds (TC) of a transition metal of Group 4 to 6 of IUPAC, a Group 2 metal compound (MC) and an internal donor (ID), a co-catalyst (Co), optionally an external donor (ED), and a polymeric nucleating agent.

The solid catalyst particles are obtained in the form of dry solid particles which are not dissolved or suspended in the solvent (S) or any other liquid medium, like oil or highly viscous substances such as oil grease mixtures.

According to the present invention, the term "liquid medium" stands for a compound which is in a liquid state of matter at temperatures from 15 to 70 °C, more preferably from 17 to 55 °C, still more preferably from 20 to 40 °C, which includes liquid solvents as well as oils or highly viscous substances such as oil-grease mixtures (cf. Römpp Chemielexikon, 9th edition, Georg Thieme Verlag).

In other words, the liquid medium is understood to cover the solvent (S) used in the process of present invention as reaction medium, as well as oils and highly viscous mediums typically used in prior art processes.

The solvent (S) used in the present invention is inert which means that the solvent (S) does not dissolve the solid catalyst particles or the polymerized vinyl compounds.

The term "dry solid particles" as used herein stands for solid particles which may contain only small amounts of the solvent (S) and are free of any other liquid medium, like oil or highly viscous substances such as oil grease mixtures in detectable amounts. Accordingly, the inventive solid catalyst particles contain less than 15 wt.-% of the solvent (S), or preferably at most 10 wt.-%. Solid modified catalyst particles containing less than 15 wt.-% or more preferably less than 10 wt.-% of the solvent (S) can be handled as dry powder due to the porosity of the particles. The solvent (S) stays inside the particles.

Accordingly, the solid catalyst particles may contain small amounts of residual solvent as outlined above, but are not part of a homogenous or heterogeneous mixture comprising said solid catalyst particles and any liquid medium. The liquid medium used in the present invention is the solvent (S) as defined above, i.e. being an organic inert solvent having a boiling point below 130 °C. The liquid medium used in prior art is oil or highly viscous substances such as oil grease mixtures. Thus, according to the present invention the solid dry catalyst particles do not form a solution or suspension with the solvent (S) used in the present invention nor with any oil or with any highly viscous substances according to the prior art or any other liquid medium.

Accordingly, the solid catalyst particles are present as dry solid particles as defined above and do not contain any oil or highly viscous substances. The final solid catalyst particles are obtained in the form of dry solid particles, which may contain only small amounts of the solvent (S) as outlined above.

Thus, the solid catalyst particles are dry solid particles which can be stored and/or transported for later use.

The solid catalyst particles comprise a Ziegler-Natta catalyst (ZN-C), a cocatalyst (Co), an internal donor (ID), a polymeric nucleating agent and optionally an external donor (ED).

A Ziegler Natta catalyst as defined herein is an organometallic catalyst for the preparation of polyolefins, said catalyst comprising an organometallic Group 2 compound, a transition metal compound of a Group 4 to 6 metal and an internal electron donor.

Any stereospecific Ziegler-Natta catalyst for the polymerization of olefins can be used which is capable of catalyzing polymerization and copolymerization of propylene and comonomers at a pressure of 5 to 100 bar, in particular 20 to 80 bar, and at a temperature of 40 to 110 °C, in particular 60 to 100 °C, like 50 to 90 °C.

The Ziegler-Natta catalyst (ZN-C) contains a transition metal compound (TC) preferably selected from of a transition metal of Group 4 or 5 of IUPAC. More preferably, said transition metal compound (TC) is selected from the group of titanium compounds having an oxidation degree of 4 and vanadium compounds, titanium tetrachloride being particularly preferred.

As outlined above, the Ziegler-Natta catalyst further comprises a Group 2 metal compound (MC). Preferably, the Group 2 metal compound (MC) is a magnesium compound, more preferably a magnesium halide. Said magnesium halide is, for example, selected from the group of magnesium chloride, compound of magnesium chloride with a lower alkanol and other derivatives of magnesium chloride.

MgCl₂ can be used as such or it can be combined with silica, e.g. by absorbing the silica with a solution or slurry containing MgCl₂. The lower alkanol used can be preferably methanol or ethanol, particularly ethanol.

A catalyst useful in the present process can be prepared by reacting a magnesium halide compound with titanium tetrachloride and an internal donor resulting in supported catalysts. Internal electron donors can be selected from among others, 1,3-diethers and (di)esters of (di)carboxylic acids, like phthalates, malonates, maleates, substituted maleates, benzoates, glutarates, cyclohexene-1,2-dicarboxylates and succinates or derivatives thereof.

One preferred catalyst type comprises a transesterified catalyst, in particular a catalyst transesterified with phthalic acid or its derivatives. The alkoxy group of the phthalic acid ester used in the transesterified catalyst comprises at least five carbon atoms, preferably at least 8 carbon atoms. Thus, as the ester can be used for example propylhexyl phthalate, dioctyl phthalate, dinonyl phthalate, diisodecyl phthalate, di-undecyl phthalate, ditridecyl phthalate or ditetradecyl phthalate.

Accordingly, a preferred supported Ziegler-Natta catalyst comprises an internal donor (ID) being a dialkylphthalate of formula (II) 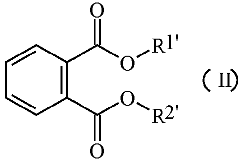 wherein R^{1'} and R^{2'} are independently a C₂ - C₁₈ alkyl, preferably a C₂ to C₈ alkyl.

The partial or complete transesterification of the phthalic acid ester can be carried out e.g. by selecting a phthalic acid ester - a lower alcohol pair, which spontaneously or with the aid of a catalyst which does not damage the procatalyst composition, transesterifies the catalyst at elevated temperatures. It is preferable to carry out the transesterification at a temperature, which lies in the range of 110 to 150 °C, preferably 120 to 140 °C. Examples of suitable supported Ziegler-Natta catalysts are described in, for example, EP491566, EP591224 and EP586390.

Solid Ziegler-Natta catalysts can also be prepared without using an external support material, like MgCl₂ or silica. Such type of catalysts can be prepared according to the general procedure comprising contacting a solution of Group 2 metal alkoxy compound with an internal electron donor, or a precursor thereof, and with at least one compound of a transition metal of Group 4 to 6 in an organic liquid medium, and obtaining the solid catalyst.

Thus, according to one embodiment of the general procedure above the solid catalyst can is prepared by the process comprising
i)preparing a solution of Group 2 metal complex by reacting a Group 2 metal alkoxy compound and an electron donor or a precursor thereof in a reaction medium comprising C₆ - C₁₀ aromatic liquid;
ii) reacting said Group 2 metal complex with at least one compound of a transition metal of Group 4 to 6 and
iii) obtaining the solid catalyst component particles.

According to the general procedures above the solid catalyst component can be obtained via precipitation method or via emulsion - solidification method depending on the physical conditions, especially temperature used in different contacting steps. Emulsion is also called liquid/liquid two-phase system.

The catalyst chemistry is independent on the selected preparation method, i.e. whether said precipitation or emulsion-solidification method is used.

In the precipitation method combination of the solution of step i) with the at least one transition metal compound in step ii) is carried out, and the whole reaction mixture is kept above 50 °C, more preferably within the temperature range of 55 to 110 °C, more preferably within the range of 70 to 100 °C, to secure the full precipitation of the catalyst component in form of a solid particles in step iii).

In emulsion - solidification method in step ii) the solution of step i) is typically added to the at least one transition metal compound at a lower temperature, such as from -10 to below 50°C, preferably from -5 to 30°C. During agitation of the emulsion the temperature is typically kept at -10 to below 40°C, preferably from -5 to 30°C. Droplets of the dispersed phase of the emulsion form the active catalyst composition. Solidification (step iii)) of the droplets is suitably carried out by heating the emulsion to a temperature of 70 to 150°C, preferably to 80 to 110°C.

The magnesium alkoxy compounds of step i) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solid particulate product obtained by precipitation or emulsion - solidification method may be washed at least once, preferably at least twice, most preferably at least three times with an aromatic and/or aliphatic hydrocarbons, preferably with toluene, heptane or pentane and/or with TiCl₄ Washing solutions can also contain additional amount of the internal donor used and/or compounds of Group 13 metal, preferably aluminum compounds of the formula AlR₃₋ₙXₙ, where R is an alkyl and/or an alkoxy group of 1 to 20, preferably of 1 to 10 carbon atoms, X is a halogen and n is 0, 1 or 2. Typical Al compounds comprise triethylaluminum and diethylaluminum chloride. Aluminum compounds can also be added during the catalyst synthesis at any step before the final recovery, e.g. in emulsion-solidification method the aluminium compound can be added and brought into contact with the droplets of the dispersed phase of the agitated emulsion.

The finally obtained Ziegler-Natta catalyst component is desirably in the form of particles having generally a mean particle size range of 5 to 200 µm, preferably 10 to 100 µm.

Particles of the solid catalyst component prepared by emulsion-solidification method have surface area below 20 g/m², more preferably below 10 g/m², or even below the detection limit of 5 g/m².

Catalysts and preparation thereof without any external carrier material are disclosed e.g. in WO-A-2003/000757, WO-A-2003/000754, WO-A-2004/029112 or WO2007/137853.

The modified catalyst, i.e. the catalyst in the form of solid catalyst particles according to the invention and prepared by the method of the invention, is used in propylene polymerization process as indicated above. Said catalyst particles may be fed to the polymerization process using feeding systems as conventionally used, e.g. catalyst particles may be slurried in a feeding medium and fed as catalyst slurry into the process.

In addition to the catalyst particles of the invention an organometallic cocatalyst (Co) and optionally an external donor (ED), as defined above are typically fed to the polymerization process.

The external donors can be the external donors as defined above.

In particular, the external donor is selected from the group consisting of dicyclopentyl dimethoxysilane, diisopropyl dimethoxysilane, methylcyclohexyldimethoxy silane, diisobutyl dimethoxysilane, and di-t-butyl dimethoxysilane.

An organoaluminum compound is used as a co-catalyst (Co). The organoaluminium compound is preferably selected from the group consisting of trialkylaluminium, dialkyl aluminium chloride and alkyl aluminium sesquichloride, where the alkyl groups contain 1 to 4 C atoms, preferably 1 to 2 C atoms. Especially preferred cocatalyst is triethylaluminium (TEAL).

Next to the Ziegler-Natta catalyst (ZN-C), the solid catalyst particles further comprise a polymeric nucleating agent.

A preferred example of such a polymeric nucleating agent is a vinyl polymer, such as a vinyl polymer derived from monomers of the formula (I)

CH₂=CH-CHR¹R² (I)

wherein R¹ and R² are as defined above. Preferred vinyl monomers for the preparation of a polymeric nucleating agent to be used in accordance with the present invention are in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer.

Accordingly, the polymeric nucleating agent is preferably selected from the group of polyvinylalkanes or polyvinylcycloalkanes, in particular polyvinylcyclohexane (polyVCH), polyvinylcyclopentane, polyvinyl-2-methyl cyclohexane, poly-3-methyl-1-butene, poly-3-ethyl-1-hexene, poly-4-methyl-1-pentene, polystyrene, poly-p-methyl-styrene, polyvinylnorbornane or mixtures thereof.

With regard to the nucleating technology using vinyl monomers reference is made to the international applications WO 99/24478, WO 99/24479 and WO 00/68315.

Accordingly, it is preferred that the polymeric nucleating agent is obtained in the presence of the Ziegler-Natta catalyst (ZN-C) comprising compounds (TC) of a transition metal of Group 4 to 6 of IUPAC, a Group 2 metal compound (MC) and an internal donor (ID), a cocatalyst (Co), and optionally an external donor (ED) as described above. The resulting mixture of the Ziegler-Natta catalyst (ZN-C) and the polymeric nucleating agent obtained in the presence of said catalyst corresponds to the inventive solid catalyst particles. In other words, the Ziegler-Natta catalyst (ZN-C) is modified by polymerization of a vinyl monomer of formula (I) as described above in the presence of said catalyst.

The process for obtaining the inventive solid catalyst particles is described in more detail below.

### The process for the preparation of the solid catalyst particles

As outlined above, the solid catalyst particles are obtained by polymerization of a vinyl monomer in the presence of the Ziegler-Natta catalyst (ZN-C).

Accordingly, the inventive process comprises the steps of
i) polymerizing a vinyl monomer of formula (I)

   CH₂=CH-CHR¹R² (I)

   wherein R¹ and R² are defined as outlined above,
   in the presence of
      (a) a Ziegler-Natta catalyst (ZN-C) comprising compounds (TC) of a transition metal of Group 4 to 6 of IUPAC, a Group 2 metal compound (MC) and an internal donor (ID);
      (b) a co-catalyst (Co),
      (c) optionally an external donor (ED), and
      (d) a solvent (S) having a boiling point below 130 °C which does not essentially dissolve the polymerized vinyl compound,
ii) continuing the polymerization reaction of the vinyl monomer until the concentration of unreacted vinyl monomer is less than 1.5 wt.-% in the reaction mixture, whereby no prepolymerization with propylene and/or ethylene and/or alpha olefin(s) takes place,
iii) removing the solvent (S) to obtain the catalyst in the form of dry solid particles.

When removing the solvent (S) in step iii), remaining unreacted vinyl monomers dissolved in the solvent are removed together with the solvent.

Concerning the definitions and preferred embodiments of the vinyl monomer of formula (I), the Ziegler-Natta catalyst (ZN-C), the compounds (TC) of a transition metal of Group 4 to 6 of IUPAC, the Group 2 metal compound (MC), the internal donor (ID), the external donor (ED) and the co-catalyst (Co), reference is made to the information provided above.

Generally, the process according to the present invention for the preparation of an olefin polymerization catalyst comprises the steps of modifying a catalyst by polymerizing a vinyl monomer in the presence thereof to provide a modified catalyst, wherein the polymerization of the vinyl monomer is carried out in a low boiling solvent which is subsequently removed from the catalyst in order to obtain the inventive catalyst in the form of solid particles.

In particular, the Ziegler-Natta catalyst (ZN-C) is first slurried in the solvent, then the vinyl monomer is added and subjected to polymerization in the presence of the catalyst at an elevated temperature of less than 70 °C to provide a modified catalyst comprising the Ziegler-Natta catalyst (ZN-C) and the polymeric nucleating agent obtained from the vinyl monomer. Said modified catalyst is obtained as a slurry of the catalyst and the solvent (S). Thus, it is required that the solvent does not dissolve the catalyst or the obtained polymeric nucleating agent. The solvent is subsequently removed in order to obtain the modified catalyst in the form of solid, dry catalyst particles, which, as outlined above, may contain only small amount of the solvent (S) and is free of any other liquid mediums such as oils or oil-grease mixtures

The thus obtained dry catalyst can be stored for later use and then be slurried again into a feeding medium to be used in the polymerization process. A prepolymerization step can precede the actual polymerization step, i.e. the dry catalyst slurried into a feeding medium can fed to the prepolymerization step, where it is prepolymerized with propylene (or another l-olefin) and then the prepolymerized catalyst composition is used for catalyzing polymerization of propylene optionally with comonomers. Prepolymerization here means a usually continuous process step, prior to the main polymerization step(s). The polymers prepared comprise propylene homopolymers, propylene random copolymers and propylene block copolymers, where the comonomers are selected from ethylene and/or α-olefin of 4 to 10 C-atoms. The α-olefin is preferably an α-olefin 4 to 8 C-atoms, especially 1-butene or 1-hexene.

A suitable solvent (S) for the modification of the Ziegler-Natta catalyst (ZN-C) according to step i) of the inventive process is a solvent which can easily be removed after the polymerization of the vinyl compound so that a dry solid catalyst is obtained. Therefore, the solvent (S) which is applied for the inventive process is typically a low viscous solvent having a boiling point below 130 °C, more preferably below 100 °C. In some embodiments the boiling point is below 60 °C, or even below 40 °C

The solvent (S) is an inert organic solvent, which does not dissolve the polymeric nucleating agent formed during the process. However, it dissolves the vinyl monomers. The solvent does not dissolve the catalyst particles either.

Preferably, the solvent (S) according to the present invention is selected from unbranched or branched C₄ to C₈ alkanes. More preferably the solvent (S) is selected form C₅ to C₇ alkanes, i.e. pentane, hexane and heptane.

A suitable weight ratio between added amount of vinyl monomer and catalyst amount is 0.1 to 5.0, preferably 0,1 to 3.0, more preferably 0.2 to 2.0 and in particular about 0.5 to 1.5.

Further, the reaction time of the catalyst modification by polymerization of a vinyl compound should be sufficient to allow for complete reaction of the vinyl monomer so that the concentration of unreacted vinyl monomer is less than 1.5 wt.-%, preferably less than 1,0 wt.-%, more preferably less than 0.5 wt.-% in the reaction mixture. The reaction mixture comprises, preferably consists of the solvent and the reactants.

Generally, when operating on an industrial scale, a polymerization time of at least 30 minutes, preferably at least 1 hour is required. Preferably the polymerization time is in the range of 1 to 50 hours, preferably 1 to 30 hours, like 1 to 20 hours. Polymerization time in the range of 1 to 10, or even 1 to 5 hours can be used. The modification can be done at temperatures of 10 to 70 °C, preferably 35 to 65 °C.

In practice, the modification of the catalyst is carried out by feeding the Ziegler-Natta catalyst (ZN-C) comprising the compounds (TC) of a transition metal of Group 4 to 6 of IUPAC, the Group 2 metal compound (MC) and the internal donor (ID), the co-catalyst (Co), and optionally the external donor (ED) in desired order into a stirred (batch) reactor. It is preferred to feed the co-catalyst (Co) first to remove any impurities. It is also possible first to add the catalyst and then the co-catalyst optionally with the external donor.

Then, the vinyl monomer is fed into the reaction medium. The weight ratio of the vinyl monomer to the catalyst is in the range of 0.1 to below 5. The vinyl monomer is reacted with the catalyst until all or practically all of the vinyl monomer has reacted. As mentioned above, a polymerization time of at least 30 minutes, preferably at least 1 hour represents a minimum on an industrial scale, usually the reaction time should be more than 1 hour. Higher amount of vinyl monomers added requires higher polymerization time.

After the reaction, the solvent (S) is removed to obtain the modified catalyst in the form of dry solid particles. When removing the solvent, the possible unreacted vinyl monomers dissolved in the solvent will be removed as well. The removal of the solvent from the mixture can be accomplished in different ways. Industrially well-known methods to remove a solvent from a mixture containing solid particles and a liquid are filtration, centrifuging, use of hydrocyclones or simply by letting the solid particles settle and take out the liquid with a dip tube. The remaining few tens of percent of solvent can be removed by evaporation in combination with slight heating or by flushing with nitrogen.

Summarizing what has been stated above, according to one particularly preferred embodiment for modification of Ziegler Natta catalyst in a solvent (S), the modification comprises the steps of
- introducing a catalyst into the solvent (S);
- adding a co-catalyst;
- feeding a vinyl monomer to the agitated solvent (S) at a weight ratio of 0.2 to 2 vinyl monomer/catalyst;
- subjecting the vinyl monomer to a polymerization reaction in the presence of said catalyst at a temperature of 35 to 65 °C;
- continuing the polymerization reaction until a maximum concentration of the unreacted vinyl monomer of less than 1.0 wt.-%, preferably less than 0.5 wt.-% in the mixture is obtained; and
- removing the solvent to obtain the modified catalyst in the form of solid particles.

### The use

Accordingly, the solid catalyst particles as obtained from the process are used for the manufacture of a polymer, like a homopolymer of propylene or copolymer of propylene and ethylene and/or α-olefins of 4 to 10C atoms.

The polymerization process for the production of the polypropylene may be a continuous process or a batch process utilising known methods and operating in liquid phase, optionally in the presence of an inert diluent, or in gas phase or by mixed liquid-gas techniques.

The polymerization process may be a single- or multistage polymerization process such as gas phase polymerization, slurry polymerization, solution polymerization or combinations thereof.

For the purpose of the present invention, "slurry reactor" designates any reactor, such as a continuous or simple batch stirred tank reactor or loop reactor, operating in bulk or slurry and in which the polymer forms in particulate form. "Bulk" means a polymerization in reaction medium that comprises at least 60 wt-% monomer. According to a preferred embodiment the slurry reactor comprises a bulk loop reactor. By "gas phase reactor" is meant any mechanically mixed or fluid bed reactor. Preferably the gas phase reactor comprises a mechanically agitated fluid bed reactor with gas velocities of at least 0.2 m/sec.

The polypropylene can be made e.g. in one or two slurry bulk reactors, preferably in one or two loop reactor(s), or in a combination of one or two loop reactor(s) and at least one gas phase reactor. Those processes are well known to one skilled in the art.

Preferably the reactors used are selected from the group of loop and gas phase reactors and, in particular, the process employs at least one loop reactor and at least one gas phase reactor. It is also possible to use several reactors of each type. e.g. one loop reactor and two or three gas phase reactors, or two loops and one gas phase reactor in series.

If polymerization is performed in one or two loop reactors, the polymerization is preferably carried out in liquid propylene mixtures at temperatures in the range from 20°C to 100°C. Preferably, temperatures are in the range from 60°C to 80°C. The pressure is preferably between 5 and 60 bar. Possible comonomers can be fed to any of the reactors. The molecular weight of the polymer chains and thereby the melt flow rate of the polypropylene, is regulated by adding hydrogen.

The gas phase reactor can be an ordinary fluidized bed reactor, although other types of gas phase reactors can be used. In a fluidized bed reactor, the bed consists of the formed and growing polymer particles as well as still active catalyst come along with the polymer fraction. The bed is kept in a fluidized state by introducing gaseous components, for instance monomer on such flowing rate which will make the particles act as a fluid. The fluidizing gas can contain also inert carrier gases, like nitrogen and also hydrogen as a modifier. The fluidized gas phase reactor can be equipped with a mechanical mixer.

The gas phase reactor used can be operated in the temperature range of 50 to 110 °C, preferably between 60 and 90 °C and a reaction pressure between 5 and 40 bar.

Suitable processes are disclosed, among others, in WO-A-98/58976, EP-A-887380 and WO-A-98/58977.

In every polymerization step it is possible to use also comonomers selected from the group of ethylene, 1-butene, 1-pentene, 1-hexene, 1-octene and alike as well as their mixtures.

In addition to the actual polymerization reactors used for producing the propylene homo or copolymers the polymerization configuration can also include a number of additional reactors, such as pre- and/or postreactors. The prereactors include any reactor for prepolymerizing the modified catalyst with propylene and/or ethylene or other l-olefin, if necessary.

The postreactors include reactors used for modifying and improving the properties of the polymer product (cf. below). All reactors of the reactor system are preferably arranged in series.

If desired, the polymerization product can be fed into a gas phase reactor in which a rubbery copolymer is provided by a (co)polymerization reaction to produce a modified polymerization product. This polymerization reaction will give the polymerization product properties of e.g. improved impact strength. The step of providing an elastomer can be perfomed in various ways. Thus, preferably an elastomer is produced by copolymerizing at least propylene and ethylene into an elastomer.

The present polymerization product from the reactor(s), so called reactor powder in the form of polypropylene powder, fluff, spheres etc., is normally melt blended, compounded and pelletised with adjutants such as additives, fillers and reinforcing agents conventionally used in the art and/or with other polymers. Thus, suitable additives include antioxidants, acid scavengers. antistatic agents, flame retardants, light and heat stabilizers, lubricants. optionally additional nucleating agents, clarifying agents, pigments and other colouring agents including carbon black. Fillers, such as talc. mica and wollastonite can also be used.

Using a catalyst modified with the polymerized vinyl compounds as described herein results in a reactor powder where the polymerized vinyl compounds that act as nucleating agents are extremely well distributed across the particles, which induces a fast and high degree of nucleation during cooling down of the melt homogenized PP polymer.

The good nucleation effect can be seen by DSC analysis from clearly increased crystallisation temperature and an increased crystallization exotherm peak.

### The polymer

Described herein is also a polyolefin, like a homopolymer of propylene or copolymer of propylene with ethylene and/or with α-olefin of 4 to 10 C atoms, preferably α-olefin of 4 to 8 C atoms, especially 1-butene and 1-hexene, which is prepared in the presence of the solid catalyst particles as described above.

The propylene polymer obtained in the presence of the modified catalyst is a nucleated propylene polymer.

"Nucleated propylene polymer" has an increased and controlled degree of crystallinity and a crystallization temperature (Tc) which is several degrees higher than the non-nucleated polymers produced with the corresponding non-modified catalyst. Tc may be e.g. at least 7 °C, higher than the crystallization temperature of the corresponding non-nucleated polymer.

However, it is preferred that the propylene polymer is a propylene homopolymer or a copolymer of propylene and ethylene. Propylene copolymer comprises both random and heterophasic copolymers.

The propylene polymer or propylene copolymer contains about 0.0005 to 0.05 wt.-% (5 to 500 ppm by weight), preferably 0.0005 to 0.01 wt.-%, in particular 0.001 to 0.005 wt.-% (10 to 50 ppm by weight) (calculated from the weight of the composition) of the above-mentioned polymerized vinyl compound units.

The propylene polymers produced with a catalyst modified with polymerized vinyl compounds should contain essentially no free (unreacted) vinyl monomers. This means that the vinyl monomers should be essentially completely reacted in the polymerization step. Remaining unreacted vinyl monomers are removed together with the solvent during the solvent removing step.

Analysis of catalyst compositions prepared as disclosed herein has shown that the amount of unreacted vinyl monomers in the reaction mixture (including the solvent and the reactants) is less than 1.5 wt-%, in particular less than 0.5 wt.-%. The unreacted vinyl monomers are dissolved in the solvent. When the solvent is removed in order to obtain dry catalyst particles, the unreacted vinyl monomers are removed as well. As defined above, the dry catalyst particles may contain still some solvent (less than 15 wt-%). This means that less than 15 wt-%, preferably 10 wt-% or less of the non-reacted vinyl monomers in the reaction mixture may remain in the final catalyst particles. Amount of the vinyl monomers in the final propylene polymer is not detectable.

Using the modified catalyst, i.e. the solid dry catalyst particles , in the propylene polymerization the crystallization temperature (Tc) of the nucleated propylene homopolymer, is higher than 129 °C. Further, it is preferred that the crystallinity is over 50 %.

Further, the nucleated propylene homopolymer, obtained in the presence of the modified catalyst is characterized by a rather high stiffness. Accordingly, the propylene polymer has a flexural modulus measured according to ISO 178 (using the method as described in the experimental part) above 2100 MPa, preferably in the range of 2150 to 2300 MPa.

One characteristic of the the nucleated propylene homopolymer, obtained in the presence of the modified catalyst is its low amounts of xylene cold solubles (XCS), i.e. of ≤ 3.5 wt.-%, more preferably in the range of 0.5 to 2.5 wt.-%, still more preferably in the range of 0.8 to 1.5 wt.-%.

Further, the polyolefin, like the nucleated propylene homopolymer, obtained in the presence of the modified catalyst is characterized by a high isotacticity. Accordingly, it is preferred that the FTIR isotacticity is above 102 %, more preferably at least 103 %.

Thus, the propylene homopolymer has properties selected from the features above or any combination thereof.

The polyolefin, like the nucleated propylene polymer, can have a unimodal or bimodal molar mass distribution. Thus, the equipment of the polymerization process can comprise any polymerization reactors of conventional design for producing propylene homo- or copolymers.

In the following the present invention is further illustrated by means of examples.

### EXAMPLES

### 1. Definitions/Measuring Methods

The following definitions of terms and determination methods apply for the above general description of the invention as well as to the below examples unless otherwise defined. **MFR₂ (230°C)** is measured according to ISO 1133 (230°C, 2.16 kg load).

**Xylene cold soluble fraction (XCS wt.-%):** Content of xylene cold solubles (XCS) is determined at 25 °C according ISO 16152; first edition; 2005-07-01.

**DSC analysis, melting temperature (Tₘ), crystallization temperature (T_{c}) and heat of crystallization (H_{c}):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature (T_{c}) and crystallization enthalpy (H_{c}) are determined from the cooling step, while melting temperature (Tₘ) are determined from the second heating step. The crystallinity is calculated from the melting enthalpy by assuming an Hm-value of 209 J/g for a fully crystalline polypropylene (see Brandrup, J., Immergut, E. H., Eds. Polymer Handbook, 3rd ed. Wiley, New York, 1989; Chapter 3).

### Flexural Modulus:

The polymer powder was stabilised with 1500 ppm Irganox B215 and 500 ppm Ca stearate prior to melt homogenisation on a Prism extruder. The pellets were injection moulded into 60x60x2 mm plates with an Engel Es 80/25HL The test bars (10x50x2 mm) were punched out from the plates in flow direction. The flexural modulus of the test bars was determined in a 3-point-bending according to ISO178.

**FTIR isotacticity:** FTIR spectrum is obtained from a pressed PP film which is tempered in a vacuum oven for
1 hour and rested at room temperature for 16-20 h.

I.I. is an indirect method for determination of isotacticity in polypropylene based on works of D. Burfield and P. Loi (J. Appl. Polym. Sci. 1988, 36, 279) and CHISSO Corp.

(EP277514B1; 1988). It is the ratio of isotactic absorption band at 998 cm-1 to reference band at 973 cm-1. It can be expressed by the equation: $I . I . = A 998 / A 973$
A998 corresponds to 11-12 repeat units in crystalline regions
A973 corresponds to 5 units in amorphous and crystalline chains
I.I. is not direct comparable to isotacticity by NMR.

### 2. Examples

### Reference example: preparation of the Ziegler-Natta catalyst (ZN PP).

First, 0.1 mol of MgCl₂ x 3 EtOH was suspended under inert conditions in 250 ml of decane in a reactor at atmospheric pressure. The solution was cooled to the temperature of -15°C and 300 ml of cold TiCl₄ was added while maintaining the temperature at said level. Then, the temperature of the slurry was increased slowly to 20 °C. At this temperature, 0.02 mol of dioctylphthalate (DOP) was added to the slurry. After the addition of the phthalate, the temperature was raised to 135 °C during 90 minutes and the slurry was allowed to stand for 60 minutes. Then, another 300 ml of TiCl₄ was added and the temperature was kept at 135 °C for 120 minutes. After this, the catalyst was filtered from the liquid and washed six times with 300 ml heptane at 80 °C. Then, the solid catalyst component was filtered and dried.

Catalyst and its preparation concept is described in general e.g. in patent publications EP491566, EP591224 and EP586390.

### Example 1

### 1a) Vinylcyclohexane modification of the ZN PP catalyst in pentane

300 ml of pentane, 4.15 ml of triethyl aluminium (TEAL) and 1.85 ml dicyclopentyl dimethoxy silane (Do) (CAS number 126990-35-0) were added to a 1 liter reactor. After 20 minutes 20 g of the ZN PP catalyst prepared according to the reference example with Ti content 1.9 wt% was added. The Al/Ti and Al/Do molar ratios were 3.8. 20 g of vinylcyclohexane (VCH, CAS Number 695-12-5) was added during 1 hour at room temperature. The temperature was increased to 50 °C during 50 minutes and was maintained there for 2.3 hours followed by cooling to room temperature.

A small sample (5-10 ml) was withdrawn from the reactor and mixed with 50 µl of isopropanol to stop the reaction. The amount of unreacted VCH in the sample was analysed with gas chromatography (GC) and was found to be 0.42 wt%, which corresponds to a 95.5 % conversion of VCH.

The major part of pentane in the pentane/catalyst/TEAL/donor/polyVCH mixture was removed by decanting. The remaining pentane in the mixture was removed by flushing with nitrogen

### 1b) Use of the VCH modified ZN PP catalyst in propylene polymerization

Polymerization with the VCH modified catalyst was done in a 5 liter reactor. 0.158 ml TEAL, 0.027 ml donor Do and 30 ml pentane were mixed and allowed to react for 5 minutes. Half of the mixture was added to the reactor and the other half was mixed with 23.4 mg of dried VCH modified catalyst (= 11.7 mg of pure catalyst). After 10 minutes the mixture was added to the reactor. The Al/Ti molar ratio was 250 and Al/Do molar ratio 10. 550 mmol hydrogen and 1400 gram propylene were added into the reactor and the temperature was raised to 80 °C within 20 minutes while mixing. The reaction was stopped after 1 hour at 80 °C by flashing out unreacted propylene. Polymerization activity was 53 kgPP/gcath. The polymer powder was stabilized with 500 ppm Ca stearate and 1500 ppm Irganox B215 prior to palletisation on a Prism extruder. The pellets were injection moulded into plates on Engel ES 80/25HL. Flexural modulus was measured on test bars cut from the injection moulded plates. The stiffness was 2170 MPa and the other polymer structure properties are shown in table 1.

### Example 2

### 2a) VCH modification of the ZN PP catalyst in pentane

The VCH modification step in this example was done in accordance with example 1a, except that the reaction temperature was 40 °C and reaction time 2.8 hours. The amount of unreacted VCH was 0.38 wt% in the mixture, which corresponds to a 95.9 % conversion of VCH.

### 2b) Use of the VCH modified ZN PP catalyst in propylene polymerization

Polymerization was done in accordance with example 1b, except that slightly higher amount of catalyst was used, 13.0 mg. Polymerization activity was 55 kgPP/gcath and stiffness 2190 MPa. The other polymer structure properties are shown in table 1.

### Example 3

### 3a) VCH modification of the ZN PP catalyst in pentane

The VCH modification step in this example was done in accordance with example 1a, except that the reaction time was 6 hours. The amount of unreacted VCH was 0.26 wt% in the mixture, which corresponds to a 97.2 % conversion of VCH.

### 3b) Use of the VCH modified ZN PP catalyst in propylene polymerization

Polymerization was done in accordance with example 1b, except that slightly higher amount of catalyst was used, 13.2 mg. Polymerization activity was 54 kgPP/gcath and stiffness 2210 MPa. The other polymer structure properties are shown in table 1.

### Example 4

### 4a) VCH modification of the ZN PP catalyst in pentane

This example was done in accordance with example 1a, except that the reaction time at 50 °C was 6 hours and that higher amount of catalyst was used, 30 g, and pentane, 325 ml, giving a mixture with higher catalyst concentration. The amount of unreacted VCH was 0.045 wt% in the mixture, which corresponds to a 99.6 % conversion of VCH.

### 4b) Use of the VCH modified ZN PP catalyst in propylene polymerization

Polymerization was done in accordance with example 1b, except that slightly higher amount of catalyst was used, 13.2 mg. Polymerization activity was 62 kgPP/gcath and stiffness 2210 MPa. The other polymer structure properties are shown in table 1.

### Comparative example 1 (CE1)

### C1a) VCH modification of the ZN PP catalyst in oil

This comparative example was done in accordance with example 1a, except that oil (Shell Ondina oil 68) was used as medium 114 ml, catalyst amount was 40 g, Ti content in catalyst was 2.1 wt%, Al/Ti and Al/Do molar ratio 3.0, VCH/catalyst weight ratio 0.8, reaction temperature 55 °C and reaction time 20 hours. After the reaction 38 ml of a wax, White Protopet 1SH from Witco, was added to the mixture as a viscosity modifying agent. The amount of unreacted VCH was 0.085 wt% in the mixture, which corresponds to a 99.4 % conversion of VCH.

### C1b) Use of the VCH modified ZN PP catalyst in propylene polymerization

This comparative example was done in accordance with example 1b, except that the catalyst amount was 10.3 mg. The polymerization activity was 66 kgPP/gcath and stiffness 2080 MPa. The other polymer structure properties are shown in table 1.

### Comparative example 2 (CE2)

### C2a) VCH modification of the ZN PP catalyst in oil

This comparative example was done in accordance with comparative example C1a, except that the catalyst amount was 18 g, VCH/catalyst weight ratio was 2,0 and the Al/Ti and Al/Do molar ratio 4,5. The amount of unreacted VCH in the mixture was 0.15 wt%, which corresponds to a 99.2 % conversion of VCH.

### C2b) Use of the VCH modified ZN PP catalyst in propylene polymerization

This comparative example was done in accordance with example 1b, except that the catalyst amount was 8.9 mg. The polymerization activity was 89 kgPP/gcath and stiffness 2030 MPa. The other polymer structure properties are shown in table 1.

### Comparative example 3 (CE3)

### C3a) VCH modification of the ZN PP catalyst in oil

This comparative example was done in accordance with comparative example C1a, except that the catalyst amount was 18 g, Al/Ti and Al/Do molar ratio 4.5 and reaction temperature 65 °C. The amount of unreacted VCH in the mixture was 0.034 wt%, which corresponds to a 99.6 % conversion of VCH.

### C3b) Use of the VCH modified ZN PP catalyst in propylene polymerization

This comparative example was done in accordance with example 1b, except that the catalyst amount was 9.0 mg. The polymerization activity was 66 kgPP/gcath and stiffness 2000 MPa. The other polymer structure properties are shown in table 1.

### Comparative example 4 (CE4)

### C4a) VCH modification of the ZN PP catalyst in oil

This comparative example was done in accordance with comparative example C1a, except that the catalyst amount was 18 g, Al/Ti and Al/Do molar ratio 4.5, VCH/catalyst weight ratio 2.0 and reaction temperature 65 °C. The amount of unreacted VCH in the mixture was 0.022 wt%, which corresponds to a 99.9 % conversion of VCH.

### C4b) Use of the VCH modified ZN PP catalyst in propylene polymerization

This comparative example was done in accordance with example 1b, except that the catalyst amount was 9.2 mg. The polymerization activity was 82 kgPP/gcath and stiffness 2090 MPa. The other polymer structure properties are shown in table 1.

Crystallisation temperature is a good indicator of how efficient the nucleator is. Higher Tcr means more effective nucleation and higher stiffness in the end product. FTIR isotacticity is also closely linked to the stiffness of the final product. Higher isotacticity means higher stiffness. From table 1 it can be seen that the if VCH modification is done in pentane it increases Tcr with in average 0.8 °C and isotacticity with in average 1 %. The effect of this increase in Tcr and isotacticity is seen as an increase in stiffness with in average 150 MPa. From table 1 it can be seen that even if increasing the amount of polyVCH in the final product with the "preparation in oil" recipe (=comparative examples) to higher values than in the "preparation in pentane" (=examples) still the stiffness is clearly lower in the comparative examples.

**Table 1: Polymerization conditions and properties of the obtained polypropylene**

| | | **Ex 1** | **Ex 2** | **Ex 3** | **Ex 4** | **CE1** | **CE2** | **CE3** | **CE4** |
|---|---|---|---|---|---|---|---|---|---|
| **VCH modification** | | | | | | | | | |
| Catalyst | [g] | 20 | 20 | 20 | 30 | 40 | 18 | 18 | 18 |
| Medium | | pentane | pentane | pentane | pentane | oil | oil | oil | oil |
| Medium amount | [ml] | 300 | 300 | 300 | 325 | 114 | 114 | 114 | 114 |
| VCH/cat (wt/wt) | [-] | 1.0 | 1.0 | 1.0 | 1.0 | 0.8 | 2.0 | 0.8 | 2.0 |
| Temperature | [°C] | 50 | 40 | 50 | 50 | 55 | 55 | 65 | 65 |
| Time | [h] | 2.3 | 2.8 | 6.0 | 6.0 | 20 | 20 | 20 | 20 |
| VCH conversion | [%] | 95.5 | 95.9 | 97.2 | 99.6 | 99.4 | 99.2 | 99.6 | 99.9 |
| | | | | | | | | | |

| **Propylene polymerization** | | | | | | | | | |
|---|---|---|---|---|---|---|---|---|---|
| Catalyst (pure) | [mg] | 11.7 | 13.0 | 13.2 | 13.2 | 10.3 | 8.9 | 9.0 | 9.2 |
| Yield | [g] | 623 | 716 | 711 | 820 | 676 | 793 | 595 | 756 |
| Actvity | [kgPP/gcath] | 53 | 55 | 54 | 62 | 66 | 89 | 66 | 82 |
| PolyVCH in polymer* | [ppm] | 18 | 18 | 19 | 16 | 12 | 22 | 12 | 24 |
| | | | | | | | | | |

| **Polymer properties** | | | | | | | | | |
|---|---|---|---|---|---|---|---|---|---|
| MFR | [g/10min] | 14.3 | 14 | 13.7 | 13 | 15.9 | 18.6 | 16.6 | 18.1 |
| XS | [wt.-%] | 1.1 | 1.1 | 1.1 | 1.0 | 1.1 | 1.2 | 1.3 | 1.1 |
| FTIR isotacticity | [%] | 104.0 | 103.9 | 103.0 | 103.0 | 102.7 | 102.6 | 102.1 | 102.5 |
| Tm | [°C] | 166.8 | 166.8 | 166.8 | 166.5 | 166.2 | 166.0 | 166.0 | 166.2 |
| Tcr | [°C] | 129.4 | 129.2 | 129.3 | 129.2 | 128.2 | 128.7 | 128.3 | 128.7 |
| Flexural modulus | [MPa] | 2170 | 2190 | 2210 | 2210 | 2080 | 2030 | 2000 | 2090 |

| | | | | | | | | | |
|---|---|---|---|---|---|---|---|---|---|
| *calculated amount based on the amount polyVCH in the catalyst and activity of the propylene polymerization | | | | | | | | | |

## Claims

1. Process for the preparation of solid catalyst particles comprising
(a) a Ziegler-Natta catalyst (ZN-C) comprising compounds (TC) of a transition metal of Group 4 to 6 of IUPAC, a Group 2 metal compound (MC) and an internal donor (ID);
(b) a co-catalyst (Co),
(c) optionally an external donor (ED), and
(d) a polymeric nucleating agent obtained from a vinyl monomer of formula (I)
CH₂=CH-CHR¹R² (I),
wherein R¹ and R², together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system,
wherein said solid catalyst particles are not dissolved or suspended in a liquid medium,
the process comprising the steps of
i) polymerizing a vinyl monomer of formula (I)
CH₂=CH-CHR¹R² (I)
wherein R¹ and R² are defined as is claim 1, at a weight ratio of the vinyl monomer to the catalyst amounting to 0.1 to below 5,
in the presence of
(a) a Ziegler-Natta catalyst (ZN-C) comprising compounds (TC) of a transition metal of Group 4 to 6 of IUPAC, a Group 2 metal compound (MC) and an internal donor (ID);
(b) a co-catalyst (Co),
(c) optionally an external donor (ED), and
(d) an organic inert solvent (S) having a boiling point below 130 °C which does not essentially dissolve the polymerized vinyl compound,
ii) continuing the polymerization reaction of the vinyl monomer until the concentration of unreacted vinyl monomer is less than 1.5 wt.-%, whereby no prepolymerization with propylene and/or ethylene and/or alpha olefin(s) takes place,
iii) removing the solvent (S) to obtain the catalyst in the form of dry solid particles.

2. Process according to claim 1, wherein the solvent (S) is selected from unbranched or branched C₄ to C₈ alkanes.

3. Process according to claim 1 or claim 2, wherein the polymeric nucleating agent is selected from the group of polyvinylalkanes or polyvinylcycloalkanes, in particular polyvinylcyclohexane (polyVCH), polyvinylcyclopentane, polyvinyl-2-methyl cyclohexane, polystyrene, poly-p-methyl-styrene, polyvinylnorbornane or mixtures thereof.

4. Process according to any one of claims 1 to 3, wherein the compounds (TC) of a transition metal of Group 4 to 6 of IUPAC are selected from the group consisting of Group 4 and Group 5 compounds, especially titanium compounds having an oxidation degree of 4.

5. Process according to any one of claims 1 to 4, wherein the Group 2 metal compound (MC) is a magnesium compound.

6. Process according to any one of claims 1 to 5, wherein the polymeric nucleating agent comprising vinyl monomer units is obtained in the presence of the Ziegler-Natta catalyst (ZN-C) comprising compounds (TC) of a transition metal of Group 4 to 6 of IUPAC, a Group 2 metal compound (MC) and an internal donor (ID), a co-catalyst (Co), and optionally an external donor (ED).

7. Process according to any one of claims 1 to 6, wherein the co-catalyst (Co) is selected from the group consisting of organometallic compounds of Group 13 metal, preferably selected from trialkylaluminium, dialkyl aluminium chloride, alkyl aluminium dichloride and mixtures thereof, where the alkyl is a C1-C4 alkyl.

8. Process according to any one of claims 1 to 7, wherein the internal donor (ID) is selected from 1,3-diethers and (di)esters of (di)carboxylic acids, preferably is a dialkylphthalate of formula (II) 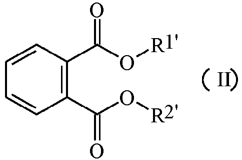 wherein R^{1'} and R^{2'} are independently a C₂- C₁₈ alkyl, preferably C₂- C₈ alkyl.

9. Process according to any one of claims 1 to 8, wherein the external donor (ED) is selected from silanes of
a compound of formula (III)
R³ₙR⁴ₘSi(OR⁵)₄₋ₙ₋ₘ (III),
wherein R³, R⁴ and R⁵can be the same or different and represent linear, branched or cyclic aliphatic or aromatic groups, and n and m are 0, 1, 2 or 3 and the sum n + m is equal to or less than 3
or
a compound of formula (IV)
Si(OCH₂CH₃)₃(NR³R⁴) (IV)
wherein R³ and R⁴ can be the same or different a represent a linear, branched or cyclic hydrocarbon group having 1 to 12 carbon atoms,
or is a compound of formula (V)
R⁶R⁷C(COMe)₂ (V),
wherein R⁶ and R⁷ can be the same or different and stand for a branched aliphatic or cyclic or aromatic group.

10. Process according to any one of claims 1 to 9, wherein the catalyst in the form of dry solid particles is used for the manufacture of a polymer, like a homopolymer of propylene or a copolymer of propylene and ethylene and/or α-olefin of 4 to 10 C-atoms.

11. Process according to claim 10, wherein the process for the manufacture of a polymer comprises at least one loop and/or at least one gas phase reactor.

12. Process according to claim 10 or claim 11, wherein the manufacture of a polymer is the manufacture of a propylene homopolymer having
i) a flexural modulus measured according to ISO 178 above 2100 MPa and/or
ii) a crystallization temperature Tc above 129 °C.

## Patentansprüche

1. Verfahren zur Herstellung fester Katalysatorpartikel, umfassend
(a) einen Ziegler-Natta-Katalysator (ZN-C), der Verbindungen (TC) eines Übergangsmetalls der Gruppen 4 bis 6 der IUPAC, eine Verbindung (MC) eines Metalls der Gruppe 2 und einen internen Donor (ID) umfasst;
(b) einen Cokatalysator (Co),
(c) gegebenenfalls einen externen Donor (ED) sowie
(d) ein polymeres Nukleierungsmittel, das aus einem Vinylmonomer der Formel (I) erhalten wird
CH₂ =CH-CHR¹ R² (I),
wobei R¹und R²zusammen mit dem Kohlenstoffatom, an das sie gebunden sind, einen gegebenenfalls substituierten gesättigten oder ungesättigten oder aromatischen Ring oder ein kondensiertes Ringsystem bilden, wobei die Ring- oder kondensierte Ringgruppe vier bis 20 Kohlenstoffatome enthält, vorzugsweise einen 5- bis 12-gliedrigen gesättigten oder ungesättigten oder aromatischen Ring oder ein kondensiertes Ringsystem,
wobei die festen Katalysatorpartikel nicht in einem flüssigen Medium gelöst oder suspendiert sind,
wobei das Verfahren die folgenden Schritte umfasst:
i) Polymerisieren eines Vinylmonomers der Formel (I)
CH₂ =CH-CHR¹ R² (I)
wobei R¹ und R² wie hier in Anspruch 1 definiert sind, bei einem Gewichtsverhältnis des Vinylmonomers zum Katalysator von 0,1 bis unter 5,
in Gegenwart
(a) von einem Ziegler-Natta-Katalysators (ZN-C), der Verbindungen (TC) eines Übergangsmetalls der Gruppen 4 bis 6 der IUPAC, eine Verbindung eines Metalls der Gruppe 2 (MC) und einen internen Donor (ID) umfasst;
(b) von einem Cokatalysators (Co),
(c) gegebenenfalls von einem externen Donor (ED) sowie
(d) von einem organischen inerten Lösungsmittel (S) mit einem Siedepunkt unter 130 °C, das die polymerisierte Vinylverbindung im Wesentlichen nicht löst,
ii) Fortsetzen der Polymerisationsreaktion des Vinylmonomers, bis die Konzentration an nicht umgesetztem Vinylmonomer weniger als 1,5 Gew.-% beträgt,
wobei keine Vorpolymerisation mit Propylen und/oder Ethylen und/oder Alpha-Olefinen stattfindet,
iii) Entfernen des Lösungsmittels (S), um den Katalysator in Form trockener fester Partikel zu erhalten.

2. Verfahren nach Anspruch 1, wobei das Lösungsmittel (S) aus unverzweigten oder verzweigten C₄- bis C₈-Alkanen ausgewählt ist.

3. Verfahren nach Anspruch 1 oder Anspruch 2, wobei das polymere Keimbildungsmittel aus der Gruppe der Polyvinylalkane oder Polyvinylcycloalkane ausgewählt ist, insbesondere Polyvinylcyclohexan (PolyVCH), Polyvinylcyclopentan, Polyvinyl-2-methylcyclohexan, Polystyrol, Poly-p-methylstyrol, Polyvinylnorbornan oder Mischungen davon.

4. Verfahren nach einem der Ansprüche 1 bis 3, wobei die Verbindungen (TC) eines Übergangsmetalls der Gruppen 4 bis 6 der IUPAC aus der Gruppe ausgewählt sind, die aus Verbindungen der Gruppen 4 und 5 besteht, insbesondere Titanverbindungen mit einem Oxidationsgrad von 4.

5. Verfahren nach einem der Ansprüche 1 bis 4, wobei die Verbindung (MC) eines Metalls der Gruppe 2 eine Magnesiumverbindung ist.

6. Verfahren nach einem der Ansprüche 1 bis 5, wobei das polymere Nukleierungsmittel, das Vinylmonomereinheiten umfasst, erhalten wird: in Gegenwart des Ziegler-Natta-Katalysators (ZN-C) der Verbindungen (TC) eines Übergangsmetalls der Gruppen 4 bis 6 der IUPAC, einer Verbindung eines Metalls der Gruppe 2 (MC) und einem internen Donor (ID), einem Cokatalysator (Co), und gegebenenfalls einem externen Donors (ED).

7. Verfahren nach einem der Ansprüche 1 bis 6, wobei der Cokatalysator (Co) aus der Gruppe ausgewählt ist, die aus metallorganischen Verbindungen von Metallen der Gruppen und 13 besteht, vorzugsweise ausgewählt aus Trialkylaluminium, Dialkylaluminiumchlorid, Alkylaluminiummdichlorid und Mischungen davon, wobei das Alkyl ein C1-C4-Alkyl ist.

8. Verfahren nach einem der Ansprüche 1 bis 7, wobei der interne Donor (ID) aus 1,3-Diethern und (Di)estern von (Di)carbonsäuren ausgewählt ist, vorzugsweise ein Dialkylphthalat der Formel (II) ist 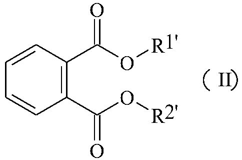 wobei R^{1'} und R^{2'} unabhängig voneinander C₂ - C₁₈-Alkyl, vorzugsweise C₂ - C₈-Alkyl, bedeuten.

9. Verfahren nach einem der Ansprüche 1 bis 8, wobei der externe Donor (ED) ausgewählt ist aus Silanen
einer Verbindung der Formel (III)
R³ₙR⁴ₘSi(OR⁵)₄₋ₙ₋ₘ (III),
wobei R³, R⁴und R⁵ gleich oder verschieden sein können und lineare, verzweigte oder cyclische aliphatische oder aromatische Gruppen darstellen, und n und m 0, 1, 2 oder 3 sind und die Summe n + m gleich oder kleiner als 3 ist,
oder
einer Verbindung der Formel (IV)
Si(OCH₂CH₃)₃(NR³R⁴) (IV)
wobei R³ und R⁴ gleich oder verschieden sein können und eine lineare, verzweigte oder cyclische Kohlenwasserstoffgruppe mit 1 bis 12 Kohlenstoffatomen darstellt,
oder
einer Verbindung der Formel (V)
R⁶ R⁷ C(COMe)₂ (V),
wobei R⁶ und R⁷ gleich oder verschieden sein können und für eine verzweigte aliphatische, cyclische oder aromatische Gruppe stehen.

10. Verfahren nach einem der Ansprüche 1 bis 9, wobei der Katalysator in Form trockener fester Partikel zur Herstellung eines Polymers, wie beispielsweise eines Homopolymers aus Propylen oder eines Copolymers aus Propylen und Ethylen und/oder einem α-Olefin mit 4 bis 10 C-Atomen, verwendet wird.

11. Verfahren nach Anspruch 10, wobei das Verfahren zur Herstellung eines Polymers mindestens einen Loop und/oder mindestens einen Gasphasenreaktor umfasst.

12. Verfahren nach Anspruch 10 oder Anspruch 11, wobei die Herstellung eines Polymers die Herstellung eines Propylen-Homopolymers mit
i) einen nach ISO 178 gemessenen Biegemodul von über 2100 MPa und/oder
ii) einer Kristallisationstemperatur Tc von über 129 °C ist.

## Revendications

1. Procédé pour la préparation de particules de catalyseur solide comprenant
(a) un catalyseur Ziegler-Natta (ZN-C) comprenant des composés (TC) d'un métal de transition du groupe 4 à 6 de l'IUPAC, un composé métallique du groupe 2 (MC) et un donneur interne (ID) ;
b) un cocatalyseur (Co),
c) optionnellement un donneur externe (ED), et
(d) un agent de nucléation polymère obtenu à partir d'un monomère vinylique de formule (I)
CH₂=CH-CHR¹R² (I),
dans lequel R¹ et R², avec l'atome de carbone auquel ils sont attachés, forment un anneau saturé ou insaturé ou aromatique optionnellement substitué ou un système d'anneaux fusionnés, dans lequel l'anneau ou la fraction d'anneaux fusionnés contient quatre à 20 atomes de carbone, de préférence un anneau saturé ou insaturé ou aromatique à 5 à 12 membres ou un système d'anneaux fusionnés,
dans lequel lesdites particules de catalyseur solide ne sont pas dissoutes ou suspendues dans un milieu liquide,
le procédé comprenant les étapes de
i) polymérisation d'un monomère vinylique de formule (I)
CH₂=CH-CHR¹R² (I),
dans lequel R¹ et R² sont définis selon la revendication 1, à un rapport pondéral du monomère vinylique sur le catalyseur s'élevant à 0,1 à moins de 5, en présence de
(a) un catalyseur Ziegler-Natta (ZN-C) comprenant des composés (TC) d'un métal de transition du groupe 4 à 6 de l'IUPAC, un composé métallique du groupe 2 (MC) et un donneur interne (ID) ;
b) un cocatalyseur (Co),
c) optionnellement un donneur externe (ED), et
(d) un solvant organique inerte (S) ayant un point d'ébullition inférieur à 130 °C qui ne dissout pas essentiellement le composé vinylique polymérisé,
ii) poursuite de la réaction de polymérisation du monomère vinylique jusqu'à ce que la concentration de monomère vinylique non réagi soit inférieure à 1,5 % en poids, moyennant quoi aucune prépolymérisation avec du propylène et/ou de l'éthylène et/ou une ou des alphaoléfines n'a lieu,
iii) élimination du solvant (S) pour obtenir le catalyseur sous forme de particules solides sèches.

2. Procédé selon la revendication 1, dans lequel le solvant (S) est sélectionné parmi les alcanes non ramifiés ou ramifiés en C₄ à C₈.

3. Procédé selon la revendication 1 ou la revendication 2, dans lequel l'agent de nucléation polymère est sélectionné dans le groupe des polyvinylalcanes ou polyvinylcycloalcanes, en particulier le polyvinylcyclohexane (polyVCH), le polyvinylcyclopentane, le polyvinyl-2-méthylcyclohexane, le polystyrène, le poly-p-méthyl-styrène, le polyvinylnorbornane ou des mélanges de ceux-ci.

4. Procédé selon l'une des revendications 1 à 3, dans lequel les composés (TC) d'un métal de transition du groupe 4 à 6 d'IUPAC sont sélectionnés dans le groupe consistant en composés du groupe 4 et du groupe 5, en particulier les composés de titane ayant un degré d'oxydation de 4.

5. Procédé selon l'une des revendications 1 à 4, dans lequel le composé métallique (MC) du groupe 2 est un composé de magnésium.

6. Procédé selon l'une des revendications 1 à 5, dans lequel l'agent de nucléation polymère comprenant des motifs monomère vinylique est obtenu en présence du catalyseur Ziegler-Natta (ZN-C) comprenant des composés (TC) d'un métal de transition du groupe 4 à 6 d'IUPAC, un composé métallique du groupe 2 (MC) et un donneur interne (ID), un co-catalyseur (Co), et optionnellement un donneur externe (ED).

7. Procédé selon l'une des revendications 1 à 6, dans lequel le cocatalyseur (Co) est sélectionné dans le groupe consistant en composés organométalliques de métal du groupe 13, de préférence sélectionnés parmi le trialkylaluminium, le chlorure de dialkylaluminium, le dichlorure d'alkylaluminium et des mélanges de ceux-ci, où l'alkyle est un alkyle en C1-C4.

8. Procédé selon l'une des revendications 1 à 7, dans lequel le donneur interne (ID) est sélectionné parmi les 1,3-diéthers et les (di)esters d'acides (di)carboxyliques, est de préférence un dialkylphtalate de formule (II) 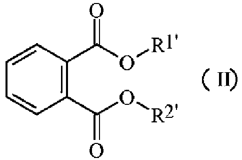 dans lequel R^{1'} et R^{2'} sont indépendamment un alkyle en C₂-C₁₈, de préférence un alkyle en C₂-C₈.

9. Procédé selon l'une des revendications 1 à 8, dans lequel le donneur externe (ED) est sélectionné parmi les silanes de
un composé de Formule (III)
R³ₙR⁴ₘSi(OR⁵)₄₋ₙ₋ₘ (III),
dans lequel R³, R⁴ et R⁵ peuvent être identiques ou différents et représenter des groupes aliphatiques ou aromatiques linéaires, ramifiés ou cycliques, et n et m sont 0, 1, 2 ou 3 et la somme n + m est égale ou inférieure à 3
ou
un composé de Formule (IV)
Si(OCH₂CH₃)₃(NR³R⁴) (IV)
dans lequel R³ et R⁴ peuvent être identiques ou différents et représentent un groupe hydrocarboné linéaire, ramifié ou cyclique ayant 1 à 12 atomes de carbone,
ou est un composé de formule (V)
R⁶R⁷C(COMe)₂ (V),
dans lequel R⁶ et R⁷ peuvent être identiques ou différents et représentent un groupe aliphatique ou cyclique ou aromatique ramifié.

10. Procédé selon l'une des revendications 1 à 9, dans lequel le catalyseur sous forme de particules solides sèches est utilisé pour la fabrication d'un polymère, tel qu'un homopolymère de propylène ou un copolymère de propylène et d'éthylène et/ou d'α-oléfine de 4 à 10 atomes C.

11. Procédé selon la revendication 10, dans lequel le procédé pour la fabrication d'un polymère comprend au moins une boucle et/ou au moins un réacteur en phase gazeuse.

12. Procédé selon la revendication 10 ou la revendication 11, dans lequel la fabrication d'un polymère est la fabrication d'un homopolymère de propylène ayant
i) un module d'élasticité en flexion mesuré selon l'ISO 178 supérieur à 2100 MPa, et/ou
ii) une température de cristallisation Tc supérieure à 129 °C.
